# EUROPEAN PATENT APPLICATION

(11) **EP 4 851 877 A1**
(43) Date of publication of application: **09.12.2026**
(21) Application number: 25760844.8
(22) Date of filing: 21.02.2025
(51) Int. Cl.: G06N 20/00

(54) **DATA PROCESSING METHOD AND APPARATUS THEREFOR**

(30) Priority: 27.02.2024 CN 202410216885
(71) Applicant: HUAWEI TECHNOLOGIES CO., LTD., Shenzhen, Guangdong 518129 (CN)
(72) Inventor: DU, Kunpeng, Shenzhen, Guangdong 518129 (CN); TU, Zhijun, Shenzhen, Guangdong 518129 (CN); CHEN, Hanting, Shenzhen, Guangdong 518129 (CN); HU, Jie, Shenzhen, Guangdong 518129 (CN); WANG, Yunhe, Shenzhen, Guangdong 518129 (CN); LI, Wei, Shenzhen, Guangdong 518129 (CN); WANG, Hailing, Shenzhen, Guangdong 518129 (CN)
(74) Representative: Goddar, Heinz J.
(86) International application number: PCT/CN2025/078435
(87) International publication number: WO 2025/180302

(57) **Abstract**

A data processing method is provided and is applied to the artificial intelligence field. In this application, a self-attention operation mechanism operation between different channels and a self-attention mechanism operation between different spaces are simultaneously performed at a same network layer, and a channel self-attention mechanism is combined with a grid-based spatial self-attention mechanism, so that a direct dependency relationship between different spatial positions can be established, direct interaction between long-distance pixels that is missing in spatial self-attention can be supplemented, and a spatial dependency between windows can also be captured.

## Description

This application claims priority to Chinese Patent Application No. 202410216885.2, filed with the China National Intellectual Property Administration on February 27, 2024 and entitled "DATA PROCESSING METHOD AND APPARATUS", which is incorporated herein by reference in its entirety.

### TECHNICAL FIELD

This application relates to the artificial intelligence field, and in particular, to a data processing method and apparatus.

### BACKGROUND

Artificial intelligence (Artificial Intelligence, AI) means theories, methods, technologies, and application systems in which human intelligence is simulated, extended, and expanded by using digital computers or machines controlled by digital computers, to perceive environments, obtain knowledge, and obtain optimal results by using the knowledge. In other words, artificial intelligence is a branch of computer science and is intended to understand essence of intelligence and produce a new intelligent machine that can react in a manner similar to human intelligence. Artificial intelligence is to research design principles and implementation methods of various intelligent machines, so that the machines have perception, inference, and decision-making functions.

A transformer-based network is a neural network based on a self-attention mechanism. In existing implementations, when implementing an attention operation, the transformer-based network either computes self-attention in a channel dimension, and cannot establish a direct dependency relationship between different spatial positions, or computes self-attention in a spatial dimension, and cannot clearly and completely capture a spatial dependency between windows. As a result, processing accuracy of the network is poor.

Therefore, it is urgent to design a network architecture that can capture the spatial dependency between the windows and establish the direct dependency relationship between the different spatial positions.

### SUMMARY

According to a first aspect, this application provides a data processing method, applied to processing of a machine learning model, where the machine learning model includes a first network, a target network layer, and a second network, a first network layer may be a network that is connected before the target network layer in the machine learning model, and a second network layer may be a network that is connected after the target network layer in the machine learning model. When processing data, the machine learning model may obtain a first feature representation of target data by using the first network based on the target data input by the machine learning model; perform a feature extraction operation based on the first feature representation by using the target network layer, to obtain a second feature representation of the target data, where the feature extraction operation includes performing a self-attention operation mechanism operation between different channels and performing a self-attention mechanism operation between different spaces, and the target network layer is a network layer in the first network; and obtain a processing result of the target data based on the second feature representation by using the second network.

In existing implementations, when implementing an attention operation, the target network layer either computes self-attention in a channel dimension, and cannot establish a direct dependency relationship between different spatial positions, or computes self-attention in a spatial dimension, and cannot clearly and completely capture a spatial dependency between windows. In this embodiment of this application, a self-attention operation mechanism operation between different channels and a self-attention mechanism operation between different spaces are simultaneously performed at a same network layer, and a channel self-attention mechanism is combined with a grid-based spatial self-attention mechanism, so that a direct dependency relationship between different spatial positions can be established, direct interaction between long-distance pixels that is missing in spatial self-attention can be supplemented, and a spatial dependency between windows can also be captured.

The target network layer may be a network layer in the first network. For example, the target network layer is a transformer layer in the first network. Implementing both the spatial self-attention operation and the channel self-attention operation at the same network layer can implement an interaction operation between two dimensions (a space and a channel). Compared with performing the spatial self-attention operation and the channel self-attention operation at different network layers, this can further improve a capability of the network to learn the direct dependency relationship between the different spatial positions and the spatial dependency between the windows. In a possible implementation, the target network layer is a transformer layer.

For example, the target data is image data, and the machine learning model may be used to execute an image processing task, so that the processing result obtained by processing the target data by using the machine learning model is a processing result of the image processing task.

For example, the target data is audio data, and the machine learning model may be used to execute an audio processing task, so that a processing result obtained by processing the target data by using the machine learning model is a processing result of the audio processing task.

For example, the target data is text data, and the machine learning model may be used to execute a text processing task, so that a processing result obtained by processing the target data by using the machine learning model is a processing result of the text processing task.

For example, the image processing task may be an image classification task, a target recognition task, an image enhancement task (for example, but not limited to super-resolution, denoising, deraining, deblurring, and demosaicing), or an image generation task.

For example, the audio processing task may be a speech-to-text conversion task, an audio enhancement task, or an audio synthesis task.

For example, the text processing task may be a summary generation task, a dialog reply task, or a text-to-image generation task.

In a possible implementation, the target network layer includes a first attention module and a second attention module, and the performing the feature extraction operation based on the first feature representation by using the target network layer includes: performing, through the first attention module, a self-attention operation mechanism operation between different channels on the first feature representation; and performing, through the second attention module, a self-attention mechanism operation between different spaces on the first feature representation on which the self-attention operation mechanism operation between the different channels is performed.

In other words, at the target network layer, the first attention module configured to perform the self-attention operation mechanism operation between the different channels and the second attention module configured to perform the self-attention mechanism operation between the different spaces may be connected in series, and the first attention module is connected before the second attention module.

In a possible implementation, the target network layer includes a first attention module and a second attention module, and the performing the feature extraction operation based on the first feature representation by using the target network layer includes: performing, through the first attention module, a self-attention mechanism operation between different spaces on the first feature representation; and performing, through the second attention module, a self-attention operation mechanism operation between different channels on the first feature representation on which the self-attention operation in a spatial dimension is performed.

In other words, at the target network layer, the first attention module configured to perform the self-attention operation mechanism operation between the different channels and the second attention module configured to perform the self-attention mechanism operation between the different spaces may be connected in series, and the second attention module is connected before the first attention module.

In a possible implementation, the target network layer includes a first processing branch and a second processing branch that are connected in parallel, the first processing branch includes a first attention module, the second processing branch includes a second attention module, and a processing result of the first processing branch is used to fuse with a processing result of the second processing branch.

In other words, at the target network layer, the first attention module configured to perform the self-attention operation mechanism operation between the different channels and the second attention module configured to perform the self-attention mechanism operation between the different spaces may not be connected in series, but belong to different branches connected in parallel.

For example, the first attention module and the second attention module may be connected in parallel. In other words, at the target network layer, the first attention module configured to perform the self-attention operation mechanism operation between the different channels and the second attention module configured to perform the self-attention mechanism operation between the different spaces may be connected in parallel. The first attention module may be configured to perform the self-attention operation mechanism operation between the different channels on the first feature representation; the second attention module may be configured to perform the self-attention mechanism operation between the different spaces on the first feature representation; and the first feature representation on which the self-attention operation mechanism operation between the different channels is performed and the first feature representation on which the self-attention operation in a spatial dimension is performed are fused.

In a possible implementation, the self-attention operation mechanism operation between the different channels includes: separately dividing a Q matrix, a K matrix, and a V matrix of an input feature to obtain multiple first Q matrices, multiple first K matrices, and multiple first V matrices, where the first Q matrices, the first K matrices, and the first V matrices are in one-to-one correspondence, and a first Q matrix, a first K matrix, and a first V matrix that have a correspondence have a consistent size; and obtaining multiple first computation results based on the multiple first Q matrices, the multiple first K matrices, and the multiple first V matrices, where each first computation result is obtained by performing an operation on a first Q matrix, a first K matrix, and a first V matrix that have a correspondence, and a fused result of the multiple first operation results is used to obtain a result of the self-attention operation mechanism operation between the different channels.

The channel self-attention mechanism (CSA) computes self-attention in the channel dimension, to obtain computational complexity with respect to resolution linearity. The channel self-attention mechanism is a spatial global-based self-attention computation method that can obtain a specific global view. However, the global view of the channel self-attention mechanism is indirectly obtained by participating in computation of a channel self-attention matrix within a global range, which is a rough global view and cannot capture an accurate established global dependency.

In this embodiment of this application, to enable the channel self-attention mechanism to focus more on local information, the original global-based channel self-attention mechanism is improved to a local context-based channel self-attention mechanism.

In a possible implementation, elements included in each of a Q matrix, a K matrix, and a V matrix of an input feature may be further shuffled and divided to obtain multiple second Q matrices, multiple second K matrices, and multiple second V matrices, where the second Q matrices, the second K matrices, and the second V matrices are in one-to-one correspondence, and the corresponding second Q matrix, second K matrix, and second V matrix have a consistent size. Different from the foregoing manner 1, implementation of the manner 1 is directly performing splitting based on divided windows, and computing channels in windows that do not overlap each other, and implementation of the manner 2 is first sliding a window in space, and then computing window channel self-attention in a same manner. Similar to the foregoing manner 1, in the manner 2, multiple second computation results may also be obtained based on the multiple second Q matrices, the multiple second K matrices, and the multiple second V matrices, where each second computation result is obtained by performing an operation on a second Q matrix, a second K matrix, and a second V matrix that have a correspondence, and a fused result (for example, concatenation) of the multiple second operation results is used to obtain a result of the self-attention operation mechanism operation between the different channels.

In a possible implementation, the method further includes: fusing a fused result of the multiple first operation results and the fused result of the multiple second operation results, to obtain the result of the self-attention operation mechanism operation between the different channels.

In a possible implementation, the first network, the target network layer, or the second network further includes a feed-forward network FFN; and the FFN is used to perform multiple parallel depth separable convolution operations and/or multiple serial point convolution operations on a result obtained through nonlinear activation; or the FFN is used to perform a target point convolution operation on a result obtained through nonlinear activation.

In the conventional technology, for a local enhanced feed-forward network, 3x3 depth separable convolutions are inserted between 1x1 convolutions based on the feed-forward network, to improve a local feature extraction capability. However, a perception view of the 3x3 depth separable convolutions is limited, and a larger-scale local feature cannot be extracted.

In this embodiment of this application, the multiple parallel depth separable convolution operations and/or the multiple serial point convolution operations are connected after a nonlinear layer, so that the larger-scale local feature can be extracted, to significantly enhance performance of the FFN.

In a possible implementation,
during model training, the FFN is used to perform the multiple parallel depth separable convolution operations and/or the multiple serial point convolution operations on the result obtained through nonlinear activation; and
during model inference, the FFN is used to perform the target point convolution operation on the result obtained through nonlinear activation, and the target point convolution operation is equivalent to the multiple parallel depth separable convolution operations and/or the multiple serial point convolution operations after training.

In a training phase, a network representation capability is enhanced by adding serial point convolutions and parallel depth separable convolutions with multiple convolution kernel sizes. In an inference phase, the serial point convolutions are re-parameterized into one point convolution, and the parallel multi-path depth separable convolutions are re-parameterized into one depth separable convolution with a large convolution kernel. Therefore, computation load in the inference phase is greatly reduced without losing a model representation capability.

According to a second aspect, this application provides a data processing apparatus, applied to processing of a machine learning model, where the machine learning model includes a first network, a target network layer, and a second network, and the apparatus includes:
an obtaining module, configured to obtain target data; and
a processing module, configured to obtain a first feature representation of the target data based on the target data by using the first network; and perform a feature extraction operation based on the first feature representation by using the target network layer, to obtain a second feature representation of the target data, where the feature extraction operation includes performing a self-attention operation mechanism operation between different channels and performing a self-attention mechanism operation between different spaces, and the target network layer is a network layer in the first network; and
obtain a processing result of the target data based on the second feature representation by using the second network.

In a possible implementation,
the target data is image data, and the processing result is a processing result of an image processing task; or
the target data is audio data, and the processing result is a processing result of an audio processing task; or
the target data is text data, and the processing result is a processing result of a text processing task.

In a possible implementation, the target network layer includes a first attention module and a second attention module, and the processing module is specifically configured to:
perform, through the first attention module, a self-attention operation mechanism operation between different channels on the first feature representation; and
perform, through the second attention module, a self-attention mechanism operation between different spaces on the first feature representation on which the self-attention operation mechanism operation between the different channels is performed.

In a possible implementation, the target network layer includes a first attention module and a second attention module, and the processing module is specifically configured to:
perform, through the first attention module, a self-attention mechanism operation between different spaces on the first feature representation; and
perform, through the second attention module, a self-attention operation mechanism operation between different channels on the first feature representation on which the self-attention operation in a spatial dimension is performed.

In a possible implementation, the target network layer includes a first processing branch and a second processing branch that are connected in parallel, the first processing branch includes a first attention module, the second processing branch includes a second attention module, and a processing result of the first processing branch is used to fuse with a processing result of the second processing branch.

In a possible implementation, the self-attention operation mechanism operation between the different channels includes:
separately dividing a Q matrix, a K matrix, and a V matrix of an input feature to obtain multiple first Q matrices, multiple first K matrices, and multiple first V matrices, where the first Q matrices, the first K matrices, and the first V matrices are in one-to-one correspondence, and a first Q matrix, a first K matrix, and a first V matrix that have a correspondence have a consistent size;
obtaining multiple first computation results based on the multiple first Q matrices, the multiple first K matrices, and the multiple first V matrices, where each first computation result is obtained by performing an operation on a first Q matrix, a first K matrix, and a first V matrix that have a correspondence; and
fusing the multiple first operation results to obtain a result of the self-attention operation mechanism operation between the different channels.

In a possible implementation, the self-attention operation mechanism operation between the different channels includes:
shuffling and dividing elements included in each of a Q matrix, a K matrix, and a V matrix of an input feature to obtain multiple second Q matrices, multiple second K matrices, and multiple second V matrices, where the second Q matrices, the second K matrices, and the second V matrices are in one-to-one correspondence, and the corresponding second Q matrix, second K matrix, and second V matrix have a consistent size; and
obtaining multiple second computation results based on the multiple second Q matrices, the multiple second K matrices, and the multiple second V matrices, where each second computation result is obtained by performing an operation on a second Q matrix, a second K matrix, and a second V matrix that have a correspondence, and a fused result of the multiple second operation results is used to obtain a result of the self-attention operation mechanism operation between the different channels.

In a possible implementation, the processing module is further configured to:
fuse a fused result of the multiple first operation results and the fused result of the multiple second operation results, to obtain the result of the self-attention operation mechanism operation between the different channels.

In a possible implementation, the first network, the target network layer, or the second network further includes a feed-forward network FFN; and
the FFN is used to perform multiple parallel depth separable convolution operations and/or multiple serial point convolution operations on a result obtained through nonlinear activation; or
the FFN is used to perform a target point convolution operation on a result obtained through nonlinear activation.

In a possible implementation,
during model training, the FFN is used to perform the multiple parallel depth separable convolution operations and/or the multiple serial point convolution operations on the result obtained through nonlinear activation; and
during model inference, the FFN is used to perform the target point convolution operation on the result obtained through nonlinear activation, and the target point convolution operation is equivalent to the multiple parallel depth separable convolution operations and/or the multiple serial point convolution operations after training.

According to a third aspect, an embodiment of this application provides a data processing apparatus. The apparatus may include a memory, a processor, and a bus system. The memory is configured to store a program. The processor is configured to execute the program in the memory, to perform the method according to any one of the first aspect and the optional implementations of the first aspect.

According to a fourth aspect, an embodiment of this application provides a computer-readable storage medium. The computer-readable storage medium stores a computer program, and when the computer program is run on a computer, the computer is enabled to perform the method according to any one of the first aspect and the optional implementations of the first aspect.

According to a fifth aspect, an embodiment of this application provides a computer program. When the computer program is run on a computer, the computer is enabled to perform the method according to any one of the first aspect and the optional implementations of the first aspect.

According to a sixth aspect, this application provides a chip system. The chip system includes a processor configured to support a data processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

### BRIEF DESCRIPTION OF DRAWINGS

FIG. 1 is a diagram of a structure of an artificial intelligence main framework;
FIG. 2 is a diagram of a structure of a server;
FIG. 3 is a schematic flowchart of a data processing method according to an embodiment of this application;
FIG. 4 shows a cloud service procedure;
FIG. 5 is a schematic flowchart of a data processing method according to an embodiment of this application;
FIG. 6 is a diagram of processing of a data processing method according to an embodiment of this application;
FIG. 7 is a diagram of processing of a data processing method according to an embodiment of this application;
FIG. 8 is a diagram of processing of a data processing method according to an embodiment of this application;
FIG. 9A is a diagram of processing of a data processing method according to an embodiment of this application;
FIG. 9B is a diagram of processing of a data processing method according to an embodiment of this application;
FIG. 9C(a) to FIG. 9C(c) are diagrams of effect according to an embodiment of this application;
FIG. 10 is a diagram of a structure of a data processing apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and the accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

The terms "substantially (substantially)", "about (about)", and the like used in this specification are approximation terms rather than degree terms, and are intended to take into account inherent deviations of measured values or computed values that are known to a person of ordinary skill in the art. In addition, in descriptions of embodiments of the present invention, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (example)" is intended to indicate an example or an illustration.

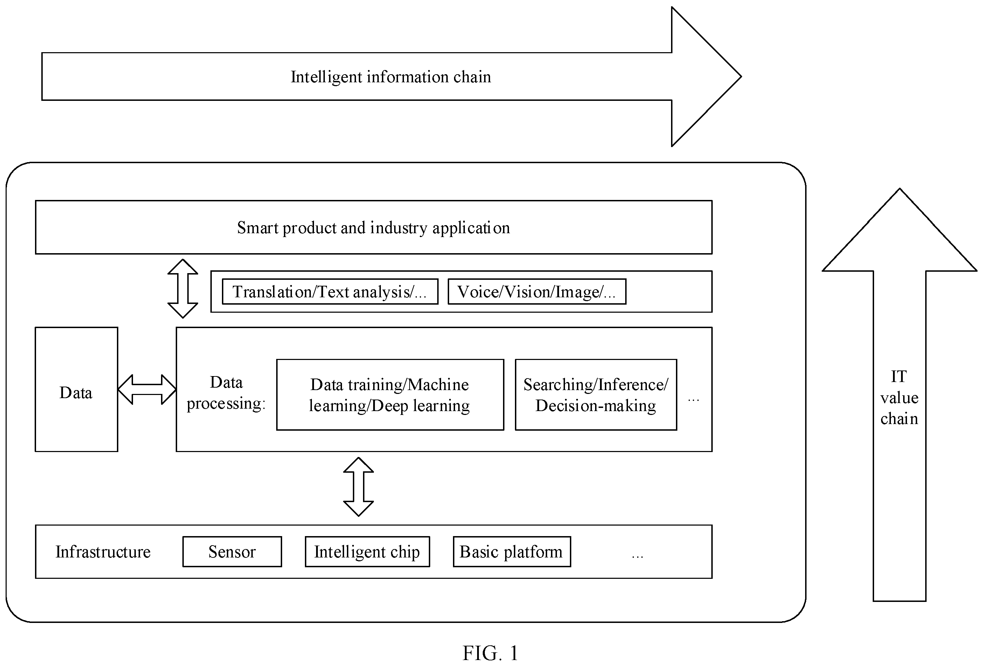

An overall working procedure of an artificial intelligence system is first described. FIG. 1 shows a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

### (3) Data processing

Data processing usually includes data training, machine learning, deep learning, search, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, ranking, and prediction.

### (4) General capability

After the foregoing data processing is performed on data, some general capabilities may be further formed based on a data processing result. For example, the general capability may be an algorithm or a general system, for example, translation, text analysis, computer vision processing, speech recognition, and image recognition.

### (5) Intelligent product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.

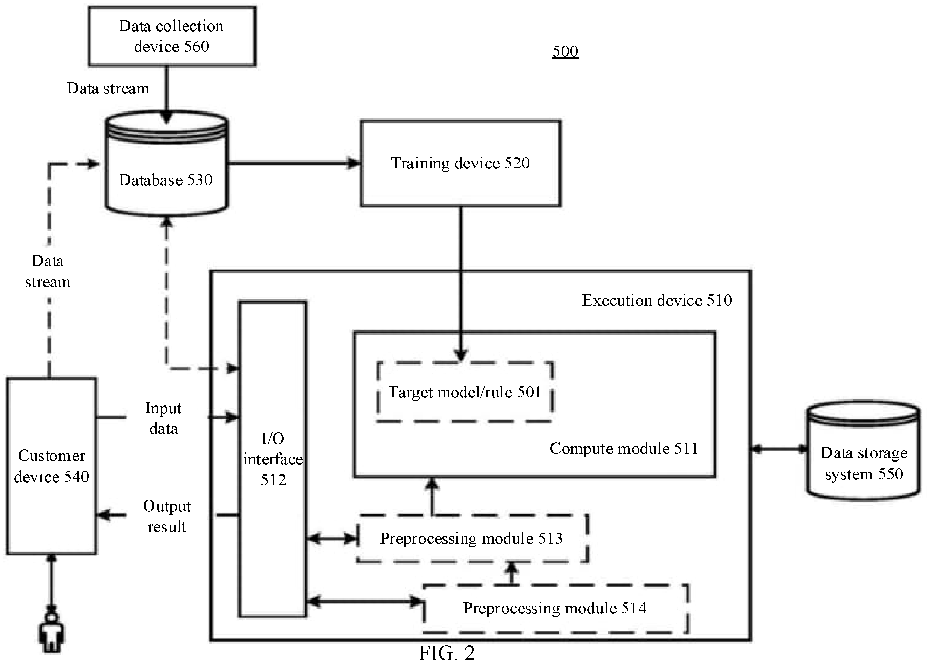

It should be understood that steps related to a model inference process in embodiments of this application relate to an AI-related operation. When the AI operation is performed, an instruction execution architecture of the terminal device and the server is not limited to the foregoing architecture in which the processor and the memory are combined. The following describes in detail a system architecture provided in embodiments of this application with reference to FIG. 2.

FIG. 2 is a diagram of a system architecture according to an embodiment of this application. As shown in FIG. 2, the system architecture 500 includes an execution device 510, a training device 520, a database 530, a client device 540, a data storage system 550, and a data collection system 560.

The execution device 510 includes a compute module 511, an I/O interface 512, a preprocessing module 513, and a preprocessing module 514. The compute module 511 may include a machine learning model/rule 501, and the preprocessing module 513 and the preprocessing module 514 are optional.

The execution device 510 may be the foregoing terminal device or server that runs an image editing and recognition application.

The data collection device 560 is configured to collect a training sample. The training sample may be image data or the like. After collecting the training sample, the data collection device 560 stores the training sample in the database 530.

The training device 520 may maintain a training sample in the database 530, and train a to-be-trained neural network (for example, a machine learning model in this embodiment of this application) to obtain the machine learning model/rule 501.

It should be understood that the training device 520 may perform a pre-training process on the to-be-trained neural network based on the training sample maintained in the database 530, or perform fine-tuning on a model based on pre-training.

It should be noted that in actual application, the training sample maintained in the database 530 is not necessarily collected by the data collection device 560, and may be received from another device. In addition, it should be noted that the training device 520 does not necessarily train the machine learning model/rule 501 based only on the training sample maintained in the database 530, and may obtain a training sample from a cloud or another place for model training. The foregoing descriptions should not be construed as a limitation on embodiments of this application.

The machine learning model/rule 501 obtained through training by the training device 520 may be applied to different systems or devices, for example, applied to the execution device 510 shown in FIG. 2. The execution device 510 may be a terminal, such as a mobile phone terminal, a tablet computer, a notebook computer, an augmented reality (augmented reality, AR)/virtual reality (virtual reality, VR) device, or an in-vehicle terminal, or may be a server, or the like.

Specifically, the training device 520 may transfer a trained model to the execution device 510.

In FIG. 2, the execution device 510 is configured with an input/output (input/output, I/O) interface 512, configured to exchange data with an external device. A user may input data (for example, target data in embodiments of this application) to the I/O interface 512 through the client device 540.

The preprocessing module 513 and the preprocessing module 514 are configured to perform preprocessing based on the input data received by the I/O interface 512. It should be understood that there may be no preprocessing module 513 and preprocessing module 514, or there may be only one preprocessing module. When there may be no preprocessing module 513 and preprocessing module 514, the compute module 511 may be directly used to process the input data.

When the execution device 510 preprocesses the input data, or when the compute module 511 in the execution device 510 performs a related processing process such as calculation, the execution device 510 may invoke data, code, and the like in the data storage system 550 for corresponding processing, or may store data, instructions, and the like obtained through corresponding processing in the data storage system 550.

Finally, the I/O interface 512 provides a processing result for the client device 540, to provide the processing result for the user.

In a case shown in FIG. 2, the user may manually specify the input data, and the "manually specifying the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Certainly, alternatively, the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 2 is merely the diagram of the system architecture according to this embodiment of this application. A position relationship between the devices, the components, the modules, and the like shown in the figure does not constitute any limitation. For example, in FIG. 2, the data storage system 550 is an external memory relative to the execution device 510, but in another case, the data storage system 550 may alternatively be disposed in the execution device 510. It should be understood that the execution device 510 may be deployed in the client device 540.

Details from the perspective of model inference are as follows:
In embodiments of this application, the compute module 511 in the execution device 510 may obtain the code stored in the data storage system 550, to implement steps related to a model inference process in embodiments of this application.

In embodiments of this application, the compute module 511 in the execution device 510 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

Specifically, the compute module 511 in the execution device 510 may be a hardware system with an instruction execution function. The steps related to the model inference process provided in embodiments of this application may be software code stored in a memory. The compute module 511 in the execution device 510 may obtain the software code from the memory, and execute the obtained software code to implement the steps related to the model inference process provided in embodiments of this application.

It should be understood that the compute module 511 in the execution device 510 may be a combination of a hardware system without an instruction execution function and a hardware system with an instruction execution function. Some of the steps related to the model inference process provided in embodiments of this application may be implemented by the hardware system without an instruction execution function in the compute module 511 in the execution device 510. This is not limited herein.

Details from the perspective of model training are as follows:
In embodiments of this application, the training device 520 may obtain code stored in a memory (which is not shown in FIG. 2, and may be integrated into the training device 520 or deployed separately from the training device 520), to implement steps related to model training in embodiments of this application.

In embodiments of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that the training device 520 may be a combination of a hardware system without an instruction execution function and a hardware system with an instruction execution function. Some of the steps related to model training provided in embodiments of this application may be implemented by the hardware system without an instruction execution function in the training device 520. This is not limited herein.

Embodiments of this application relate to massive application of a neural network. For ease of understanding, the following first describes terms and concepts related to the neural network in embodiments of this application.

### (1) Neural network

The neural network may include a neuron. The neuron may be an operation unit that uses xs (namely, input data) and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$

s=1, 2, ..., n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking multiple single neural units together. To be specific, an output of a neural unit may be an input of another neural unit. An input of each neuron may be connected to a local receptive field of a previous layer to extract a feature of the local receptive field. The local receptive field may be a region including several neurons.

(2) A convolutional neural network (convolutional neuron network, CNN) is a deep neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that a feature extraction manner is irrelevant to a position. The convolution kernel may be initialized in a form of a matrix of a random size. In a training process of the convolutional neural network, an appropriate weight may be obtained for the convolution kernel through learning. In addition, benefits directly brought by weight sharing are that connections between layers of the convolutional neural network are reduced, and an overfitting risk is reduced.

The CNN is a very common neural network. The convolutional neural network is a deep neural network with a convolutional structure, and is a deep learning (deep learning) architecture. The deep learning architecture refers to performing multi-level learning at different abstraction levels by using a machine learning algorithm. As a deep learning architecture, the CNN is a feed-forward (feed-forward) artificial neural network. Each neuron in the feed-forward artificial neural network may respond to an image input to the feed-forward artificial neural network.

### (3) Deep neural network

The deep neural network (Deep Neural Network, DNN), also referred to as a multi-layer neural network, may be understood as a neural network having many hidden layers. The "many" herein does not have a special measurement standard. The DNN is divided based on positions of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an i^{th} layer is necessarily connected to any neuron at an (i+1)^{th} layer. Although the DNN seems to be complex, the DNN is actually not complex in terms of work at each layer, and is simply expressed as the following linear relationship expression: y̅ = α(Wx̅ + b̅), where x̅ is an input vector, y̅ is an output vector, b̅ is a bias vector, W is a weight matrix (also referred to as a coefficient), and α () is an activation function. At each layer, the output vector x̅ is obtained by performing such a simple operation on the input vector y̅. Because there are many layers in the DNN, there are also many coefficients Wand bias vectors b̅. Definitions of these parameters in the DNN are as follows: The coefficient W is used as an example. It is assumed that in a three-layer DNN, a linear coefficient from the fourth neuron at the second layer to the second neuron at the third layer is defined as ${w}_{24}^{3}$. The superscript 3 represents a layer at which the coefficient W is located, and the subscript corresponds to an output third-layer index 2 and an input second-layer index 4. In conclusion, a coefficient from a k^{th} neuron at an (L-1)^{th} layer to a j^{th} neuron at an L^{th} layer is defined as ${W}_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

### (4) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

### (5) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at output, and the parameter in the initial model is updated based on back propagation error loss information, to make the error loss converge. The back propagation algorithm is an error-loss-centered back propagation motion intended to obtain a parameter, such as a weight matrix, of an optimal model.

### (6) Transformer network

The transformer network may include an embedding layer and at least one transformer layer, and the at least one transformer layer may be N transformer layers (N is an integer greater than 0). Each transformer layer includes an attention layer, an addition and normalization (add&norm) layer, a feed-forward (feed-forward) layer, and an addition and normalization (add&norm) layer that are sequentially adjacent. At the embedding layer, embedding processing is performed on a current input, to obtain multiple feature vectors. At the attention layer, P input vectors are obtained from a layer preceding the transformer layer, any first input vector in the P input vectors is used as a center, and an intermediate vector corresponding to the first input vector is obtained based on a degree of correlation between each input vector within a preset attention window and the first input vector. In this way, P intermediate vectors corresponding to the P input vectors are determined. At a pooling layer, the P intermediate vectors are combined into Q output vectors. Multiple output vectors obtained at a last transformer layer in the at least one transformer layer are used as feature representations of the current input.

The foregoing steps are described below in detail with reference to specific examples.

First, at the embedding layer, embedding processing is performed on the current input, to obtain the multiple feature vectors.

The embedding layer may be referred to as an input embedding (input embedding) layer. The current input may be a text input, for example, a piece of text or a sentence. The text may be Chinese text, English text, or text in another language. After the current input is obtained, embedding processing may be performed on all words in the current input at the embedding layer, to obtain feature vectors of all the words. In some embodiments, the embedding layer includes an input embedding layer and a positional encoding (positional encoding) layer. At the input embedding layer, word embedding processing may be performed on all the words in the current input, to obtain word embedding vectors of all the words. At the positional encoding layer, positions of all the words in the current input may be obtained, to process position vectors for the positions of all the words. In some examples, the positions of all the words may be absolute positions of all the words in the current input. For example, the current input is "what date should the Huabei debt be repaid", where a position of "what" may be represented as a first position, a position of "date" may be represented as a second position, and so on. In some examples, the positions of all the words may be positions of all the words relative to each other. For example, the current input is still "what date should the debt be repaid", where a position of "what" may be represented as preceding "date", a position of "date" may be represented as following "what" and preceding "should", and so on. When the word embedding vectors and the position vectors of all the words in the current input are obtained, the position vectors of all the words and the corresponding word embedding vectors may be combined to obtain the feature vectors of all the words, namely, the multiple feature vectors corresponding to the current input. The multiple feature vectors may be represented as an embedding matrix with a preset dimension. For the multiple feature vectors, a quantity of the feature vectors may be set to M, and the preset dimension may be set to a dimension of H. In this case, the multiple feature vectors may be represented as an M×H embedding matrix.

### (7) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula: $attention \left(query, source\right) = {\sum }_{i = 1}^{Lx} similarity \left(query, keyi\right) ∗ valuei$

Lx=∥Source∥ represents a length of a source. The formula means that constituent elements in the source are assumed to include a series of data pairs. In this case, an element query in a target (Target) is provided, similarity or a correlation between the query and each key is computed to obtain a weight coefficient of a value corresponding to each key, and then weighted summation is performed on values, to obtain a final attention value. Therefore, in essence, the attention mechanism is to perform weighted summation on values of the elements in the source, and a query and key are used to compute a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates that a value corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

A transformer architecture can well simulate long-range dependency relationship through a multi-head attention mechanism. However, computational complexity of the conventional transformer architecture increases quadratically with an input size, making it difficult to directly apply to a high-resolution image restoration task.

Computational complexity of the conventional transformer architecture increases quadratically with an input size, making it difficult to directly apply to a high-resolution image restoration task. Some recent lightweight transformer methods, including a channel self-attention mechanism, and the channel self-attention (channel self-attention, CSA) mechanism computes self-attention in a channel dimension, to obtain computational complexity with respect to resolution linearity. However, CSA cannot establish a direct dependency relationship between different spatial positions.

Therefore, it is urgent to design a network architecture that can capture the spatial dependency between the windows and establish the direct dependency relationship between the different spatial positions.

To resolve the foregoing problems, embodiments of this application provide a data processing method. The following describes in detail the data processing method in embodiments of this application with reference to the accompanying drawings.

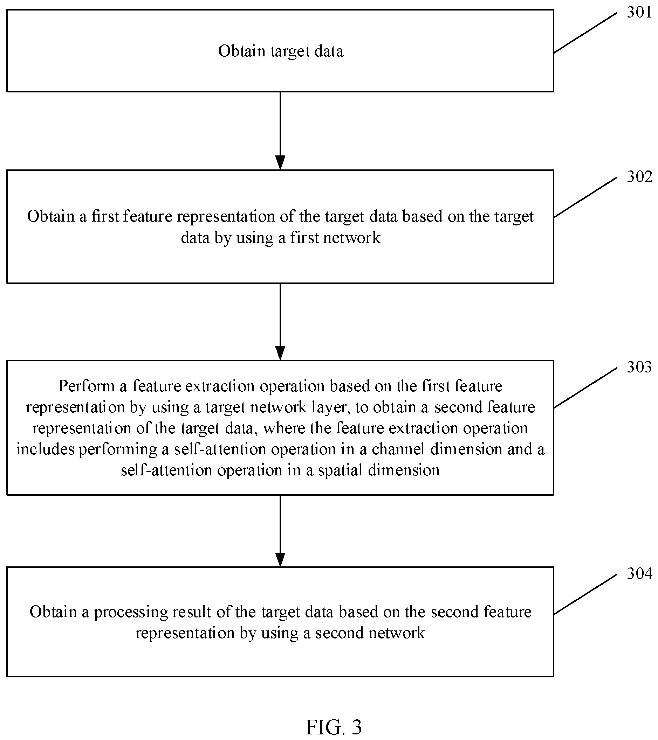

FIG. 3 is a schematic flowchart of a data processing method according to an embodiment of this application. As shown in FIG. 3, the data processing method provided in this embodiment of this application may include steps 301 to 304. The following separately describes these steps in detail.

301: Obtain target data.

This embodiment of this application may be applied to processing of a machine learning model. The machine learning model may include a first network, a target network layer, and a second network.

The target network layer may be a transformer layer or another type of network layer. Specifically, the target network layer may be a network layer in a feature extraction network of the machine learning model.

A first network layer may be a network connected before the target network layer in the machine learning model, and a second network layer may be a network connected after the target network layer in the machine learning model. For example, the first network may include an input projection layer of the machine learning model and a part of network layers in the feature extraction network, and the second network may include a part of network layers in the feature extraction network of the machine learning model (when the target network layer is a last layer of the feature extraction network, the second network may not include a network layer in the feature extraction network of the machine learning model) and a task network including an output projection layer.

In a possible implementation, the target network may be data input into the machine learning model.

For example, the target data is image data, and the machine learning model may be used to execute an image processing task, so that the processing result obtained by processing the target data by using the machine learning model is a processing result of the image processing task.

For example, the target data is audio data, and the machine learning model may be used to execute an audio processing task, so that a processing result obtained by processing the target data by using the machine learning model is a processing result of the audio processing task.

For example, the target data is text data, and the machine learning model may be used to execute a text processing task, so that a processing result obtained by processing the target data by using the machine learning model is a processing result of the text processing task.

For example, the image processing task may be an image classification task, a target recognition task, an image enhancement task (for example, but not limited to super-resolution, denoising, deraining, deblurring, and demosaicing), or an image generation task.

For example, the audio processing task may be a speech-to-text conversion task, an audio enhancement task, or an audio synthesis task.

For example, the text processing task may be a summary generation task, a dialog reply task, or a text-to-image generation task.

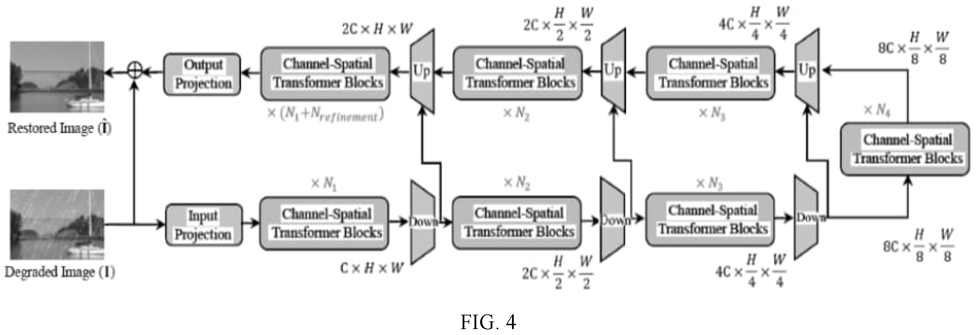

The following describes a structure of the machine learning model in this embodiment of this application with reference to the accompanying drawings. As shown in FIG. 4, a diagram of an architecture of the machine learning model is a U-shaped encoding-decoding network, including an input projection layer, a multi-layer stacked channel-spatial transformer module (channel-spatial self-attention module, CSTB), and an output projection layer. The target network layer may have a structural feature of a channel-spatial transformer module (CSTB). FIG. 4 is a diagram in which all stacked transformer layers have a structural feature of the target network layer. It should be understood that one or more of the machine learning models in this embodiment of this application may have the structural feature of the target network layer. The diagram in FIG. 4 does not constitute a limitation on this application.

Optionally, the input projection layer and the output projection layer may be a 3x3 convolution, and the channel-spatial transformer module (CSTB) is formed by a context-based channel self-attention module (context-based channel self-attention, CB-CSA) and a grid spatial self-attention module (grid spatial self-attention, G-SSA) that are connected in series, a re-parameterization locally-enhanced feed-forward network (re-parameterization locally-enhanced feed-forward network, Rep-LeFFN) and a layer normalization module (layerNorm) that are connected in series.

In addition to a Unet network, this embodiment of this application may be further applied to another network architecture. This is not limited in this application.

302: Obtain a first feature representation of the target data based on the target data by using the first network.

303: Perform a feature extraction operation based on the first feature representation by using the target network layer, to obtain a second feature representation of the target data, where the feature extraction operation includes performing a self-attention operation mechanism operation between different channels and performing a self-attention mechanism operation between different spaces.

The first feature representation may be a result that is obtained by the network connected before the target network layer, and the first feature representation may be used as an input of the target network layer.

In existing implementations, when implementing an attention operation, the target network layer either computes self-attention in a channel dimension, and cannot establish a direct dependency relationship between different spatial positions, or computes self-attention in a spatial dimension, and cannot clearly and completely capture a spatial dependency between windows. In this embodiment of this application, a self-attention operation mechanism operation between different channels and a self-attention mechanism operation between different spaces are simultaneously performed at a same network layer, and a channel self-attention mechanism is combined with a grid-based spatial self-attention mechanism, so that a direct dependency relationship between different spatial positions can be established, direct interaction between long-distance pixels that is missing in spatial self-attention can be supplemented, and a spatial dependency between windows can also be captured.

The following describes several schematic structures of the target network layer.

In a possible implementation, the target network layer includes a first attention module and a second attention module. The first attention module may be configured to perform a self-attention operation mechanism operation between different channels on the first feature representation, and the second attention module may be configured to perform a self-attention mechanism operation between different spaces on the first feature representation on which the self-attention operation mechanism operation between the different channels is performed.

In other words, at the target network layer, the first attention module configured to perform the self-attention operation mechanism operation between the different channels and the second attention module configured to perform the self-attention mechanism operation between the different spaces may be connected in series, and the first attention module is connected before the second attention module.

It should be understood that another module may be further connected between the first attention module and the second attention module.

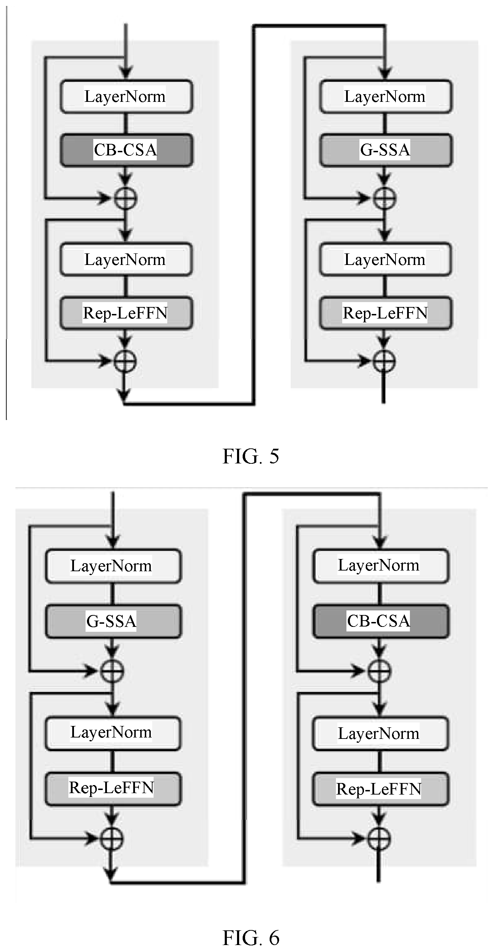

For example, FIG. 5 is a diagram of a structure of the target network layer. The first attention module (G-SSA) is before the second attention module (CB-CSA), and an FFN module, a layer normalization module, and the like may be further connected between the first attention module and the second attention module. The target network layer shown in FIG. 5 may perform the following operations: ${X}_{l}^{′} = CB - CSA \left(LN\left({X}_{l - 1}\right)\right) + {X}_{l - 1} ,$ ${X}_{l} = Rep - LeFFN \left(LN\left({X}_{l}^{′}\right)\right) + {X}_{l}^{′} ,$ ${X}_{l + 1}^{′} = G - SSA \left(LN\left({X}_{l}\right)\right) + {X}_{l} ,$ ${X}_{l + 1} = Rep - LeFFN \left(LN\left({X}_{l + 1}^{′}\right)\right) + {X}_{l + 1}^{′}$

In a possible implementation, the target network layer includes a first attention module and a second attention module. The first attention module may be configured to perform a self-attention mechanism operation between different spaces on the first feature representation, and the second attention module may be configured to perform a self-attention operation mechanism operation between different channels on the first feature representation on which the self-attention operation in a spatial dimension is performed.

In other words, at the target network layer, the first attention module configured to perform the self-attention operation mechanism operation between the different channels and the second attention module configured to perform the self-attention mechanism operation between the different spaces may be connected in series, and the second attention module is connected before the first attention module.

It should be understood that another module may be further connected between the first attention module and the second attention module.

For example, FIG. 6 is a diagram of a structure of the target network layer. The first attention module (G-SSA) is after the second attention module (CB-CSA), and an FFN module, a layer normalization module, and the like may be further connected between the first attention module and the second attention module.

In a possible implementation, the target network layer includes a first processing branch and a second processing branch that are connected in parallel, the first processing branch includes a first attention module, the second processing branch includes a second attention module, and a processing result of the first processing branch is used to fuse with a processing result of the second processing branch.

In other words, at the target network layer, the first attention module configured to perform the self-attention operation mechanism operation between the different channels and the second attention module configured to perform the self-attention mechanism operation between the different spaces may not be connected in series, but belong to different branches connected in parallel.

For example, the first attention module and the second attention module may be connected in parallel. In other words, at the target network layer, the first attention module configured to perform the self-attention operation mechanism operation between the different channels and the second attention module configured to perform the self-attention mechanism operation between the different spaces may be connected in parallel. The first attention module may be configured to perform the self-attention operation mechanism operation between the different channels on the first feature representation; the second attention module may be configured to perform the self-attention mechanism operation between the different spaces on the first feature representation; and the first feature representation on which the self-attention operation mechanism operation between the different channels is performed and the first feature representation on which the self-attention operation in a spatial dimension is performed are fused.

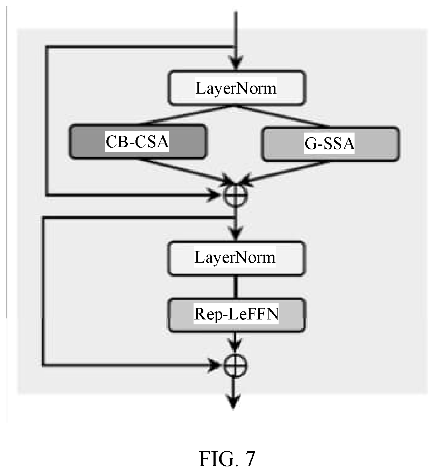

For example, FIG. 7 is a diagram of a structure of the target network layer. The first attention module (G-SSA) and the second attention module (CB-CSA) are connected in parallel.

The channel self-attention mechanism (CSA) computes self-attention in the channel dimension, to obtain computational complexity with respect to resolution linearity. The channel self-attention mechanism is a spatial global-based self-attention computation method that can obtain a specific global view. However, the global view of the channel self-attention mechanism is indirectly obtained by participating in computation of a channel self-attention matrix within a global range, which is a rough global view and cannot capture an accurate established global dependency.

In this embodiment of this application, to enable the channel self-attention mechanism to focus more on local information, the original global-based channel self-attention mechanism is improved to a local context-based channel self-attention mechanism.

### Manner 1:

In a possible implementation, when self-attention is computed in a channel dimension, a corresponding Q matrix, K matrix, and V matrix may be obtained based on an input feature. For example, three groups of a 1x1 point convolution and a 3x3 depth separable convolution are used to generate query(Q), key(K), and value(V) matrices respectively.

In a possible implementation, a Q matrix, a K matrix, and a V matrix of an input feature may be separately divided to obtain multiple first Q matrices, multiple first K matrices, and multiple first V matrices, where the first Q matrices, the first K matrices, and the first V matrices are in one-to-one correspondence, and a first Q matrix, a first K matrix, and a first V matrix that have a correspondence have a consistent size. Different from original CSA that directly computes attention maps of Q and K and applies them to V, in this embodiment of this application, the Q, K, and V matrices may be divided into windows with equal sizes in a spatial dimension.

In a possible implementation, multiple first computation results may be obtained based on the multiple first Q matrices, the multiple first K matrices, and the multiple first V matrices, where each first computation result is obtained by performing an operation on a first Q matrix, a first K matrix, and a first V matrix that have a correspondence, and a fused result (for example, concatenation) of the multiple first operation results is used to obtain a result of the self-attention operation mechanism operation between the different channels.

### Manner 2:

In a possible implementation, elements included in each of a Q matrix, a K matrix, and a V matrix of an input feature may be further shuffled and divided to obtain multiple second Q matrices, multiple second K matrices, and multiple second V matrices, where the second Q matrices, the second K matrices, and the second V matrices are in one-to-one correspondence, and the corresponding second Q matrix, second K matrix, and second V matrix have a consistent size. Different from the foregoing manner 1, implementation of the manner 1 is directly performing splitting based on divided windows, and computing channels in non-overlapping windows, and implementation of the manner 2 is first sliding a window in space, and then computing window channel self-attention in a same manner. Similar to the foregoing manner 1, in the manner 2, multiple second computation results may also be obtained based on the multiple second Q matrices, the multiple second K matrices, and the multiple second V matrices, where each second computation result is obtained by performing an operation on a second Q matrix, a second K matrix, and a second V matrix that have a correspondence, and a fused result (for example, concatenation) of the multiple second operation results is used to obtain a result of the self-attention operation mechanism operation between the different channels.

In a possible implementation, the target network layer may include the self-attention operation performed in the manner 1, and may also include the self-attention operation performed in the manner 2. The self-attention operation performed in the manner 1 and the self-attention operation performed in the manner 2 may be performed by using two branches respectively, and then a fused result of results (that is, the multiple first operation results in the foregoing embodiment) obtained by using the self-attention operation performed in the manner 1 and a fused result of results (that is, the multiple second operation results in the foregoing embodiment) obtained by using the self-attention operation performed in the manner 2 are fused.

In a possible implementation, the fused result of the multiple first operation results and the fused result of the multiple second operation results may be fused (for example, fused in a weighted manner), to obtain the result of the self-attention operation mechanism operation between the different channels.

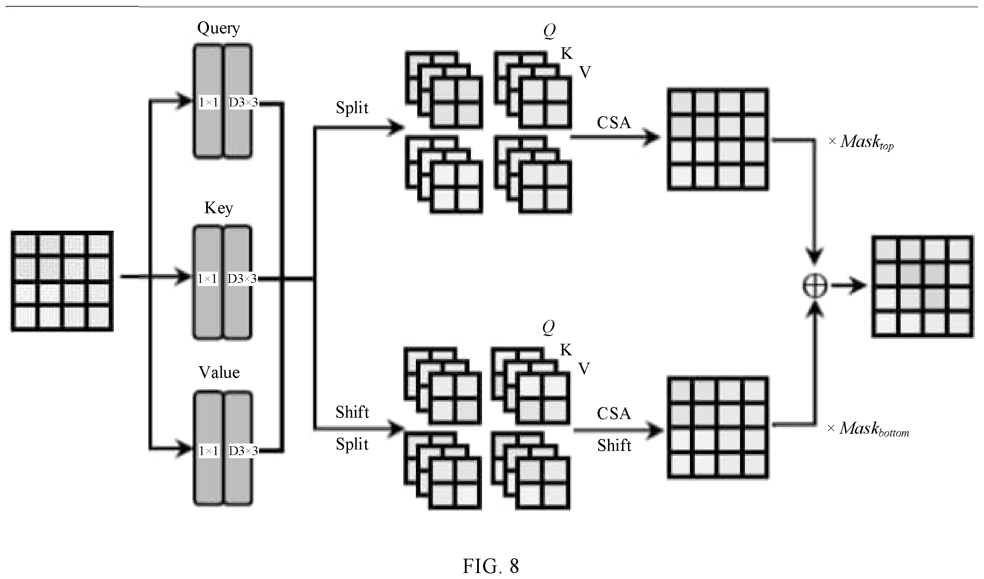

FIG. 8 is an example architecture of CB-CSA. Similar to original CSA, in a feature map, three groups of a 1x1 point convolution and a 3x3 depth separable convolution are used to first generate query(Q), key(K), and value(V) matrices respectively. Then, different from original CSA that directly computes attention maps of Q and K and applies them to V, in the present invention, the Q, K, and V matrices may be divided into windows with equal sizes in a spatial dimension. To enhance context information, two parallel branches are constructed simultaneously. In one branch, splitting is directly performed based on divided windows, and channels are computed in windows that do not overlap each other. The attention map is applied to V of the corresponding window. In the other branch, a window is first slid in space, and then window channel self-attention is computed in a same manner. Outputs obtained from the two branches are multiplied by corresponding masks respectively and then summed to obtain a final output.

The channel self-attention operation shown in FIG. 8 may be represented as the following operation: $\hat{Q} , \hat{K} = {w}_{t} \times Q , {w}_{t} \times K ,$ ${Atten}_{CB - CSA} \left(Q, K, V\right) = SoftMax \left(\hat{Q}⋅\hat{K}/α\right) V ,$ ${F}_{out} = {Mask}_{top} \times {F}_{top} + {Mask}_{bottom} \times {F}_{bottom} .$

In existing implementations, a combination of dense spatial self-attention and sparse spatial self-attention is used to establish both global and local dependencies. However, effect and computational complexity of this method are still limited by a dense self-attention mechanism (computational complexity increases quadratically with a window), resulting in suboptimal overall performance.

In CB-CSA, small windows are obtained through division in space, resulting in severe island effect, where non-adjacent windows do not interact with each other. However, an underlying vision task expects to have a global perception view to achieve better result. To resolve this problem, in embodiments of this application, a grid spatial self-attention (G-SSA) module is introduced to provide information exchange between windows.

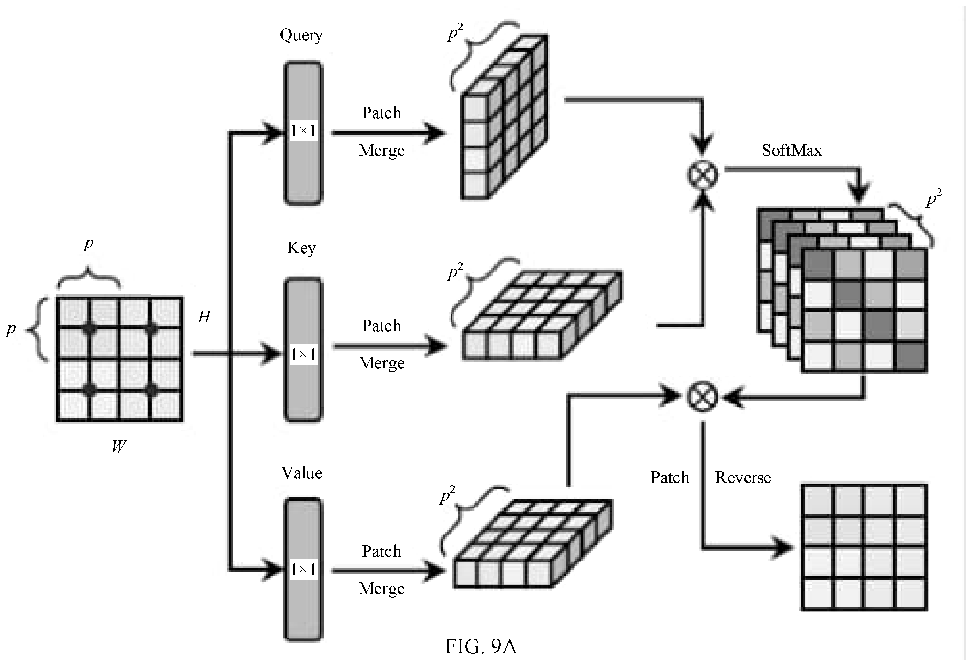

FIG. 9A is a diagram of the G-SSAmodule. Different from original SSA, in G-SSA, equal-spaced grids are obtained through division in a global spatial dimension, and spatial self-attention is computed between equal-spaced grid points. (3) G-SSA decomposes global SSA into pxp groups of global grid SSA in a spatial dimension, and computation load is also reduced to pxp times. The G-SSA module shown in FIG. 9A may perform the following operation: ${Atten}_{G - SSA} \left(Q, K, V\right) = SoftMax \left({QK}^{T}/\sqrt{d}+B\right) V ,$ $O \left({H}^{2}{W}^{2}C\right) ⇒ O \left({H}^{2}{W}^{2}C/{p}^{2}\right)$

In the conventional technology, for a local enhanced feed-forward network, 3x3 depth separable convolutions are inserted between 1x1 convolutions based on the feed-forward network, to improve a local feature extraction capability. However, a perception view of the 3x3 depth separable convolutions is limited, and a larger-scale local feature cannot be extracted.

In this embodiment of this application, the multiple parallel depth separable convolution operations and/or the multiple serial point convolution operations are connected after a nonlinear layer, so that the larger-scale local feature can be extracted, to significantly enhance performance of the FFN.

In a possible implementation, the first network, the target network layer, or the second network further includes a feed-forward network FFN; and the FFN is used to perform multiple parallel depth separable convolution operations and/or multiple serial point convolution operations on a result obtained through nonlinear activation; or the FFN is used to perform a target point convolution operation on a result obtained through nonlinear activation.

In a possible implementation, during model training, the FFN is used to perform multiple parallel depth separable convolution operations and/or multiple serial point convolution operations on a result obtained through nonlinear activation; and during model inference, the FFN is used to perform the target point convolution operation on the result obtained through nonlinear activation, and the target point convolution operation is equivalent to the multiple parallel depth separable convolution operations and/or the multiple serial point convolution operations after training.

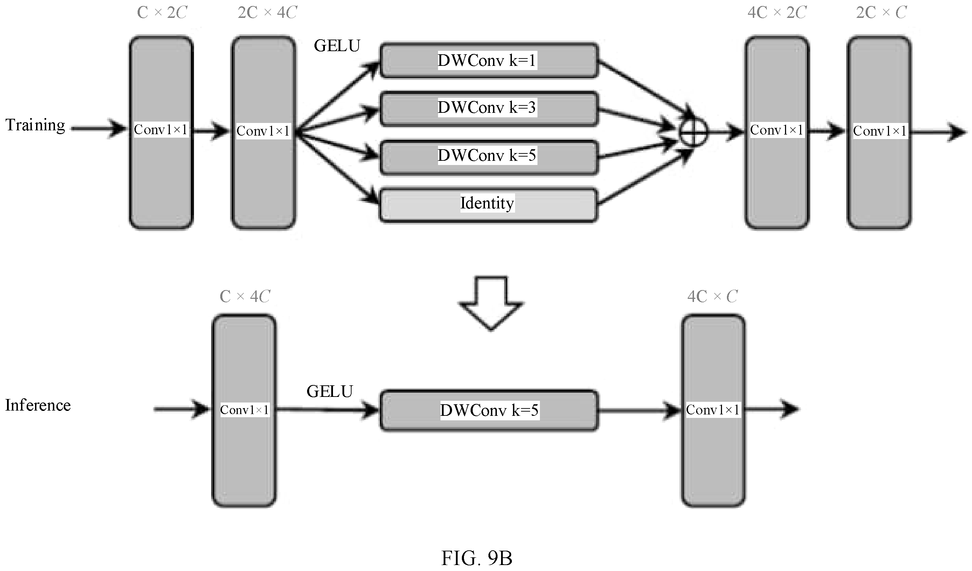

FIG. 9B is a diagram of a structure of the FFN. Based on the LeFFN, a re-parameterization method is introduced to further enhance a local representation capability of the LeFFN. As shown in FIG. 9B, in a training phase, a network representation capability is enhanced by adding serial point convolutions and parallel depth separable convolutions with multiple convolution kernel sizes. In an inference phase, the serial point convolutions are re-parameterized into one point convolution, and the parallel multi-path depth separable convolutions are re-parameterized into one depth separable convolution with a large convolution kernel. Therefore, computation load in the inference phase is greatly reduced without losing a model representation capability.

The FFN shown in FIG. 9A may perform the following operation: $FFN \left(x\right) = PW - Conv \left(GELU\left(PW-Conv\left(x\right)\right)\right) ,$ $LeFFN \left(x\right) = PW - Conv \left(DW-Conv\left(GELU\left(PW-Conv\left(x\right)\right)\right)\right) ,$ $RepPW - Conv \left(x\right) = PW - Conv \left(\left(PW-Conv\left(x\right)\right.\right) ,$ $RepDW - Conv \left(x\right) = DW - {Conv}_{5 \times 5} \left(x\right) + DW - {Conv}_{3 \times 3} \left(x\right) + DW - {Conv}_{1 \times 1} \left(x\right) + x ,$ $Rep - LeFFN \left(x\right) = RepPW - Conv \left(RepDW-Conv\left(GELU\left(RepPW-Conv\left(x\right)\right)\right)\right) ,$

304: Obtain a processing result of the target data based on the second feature representation by using the second network.

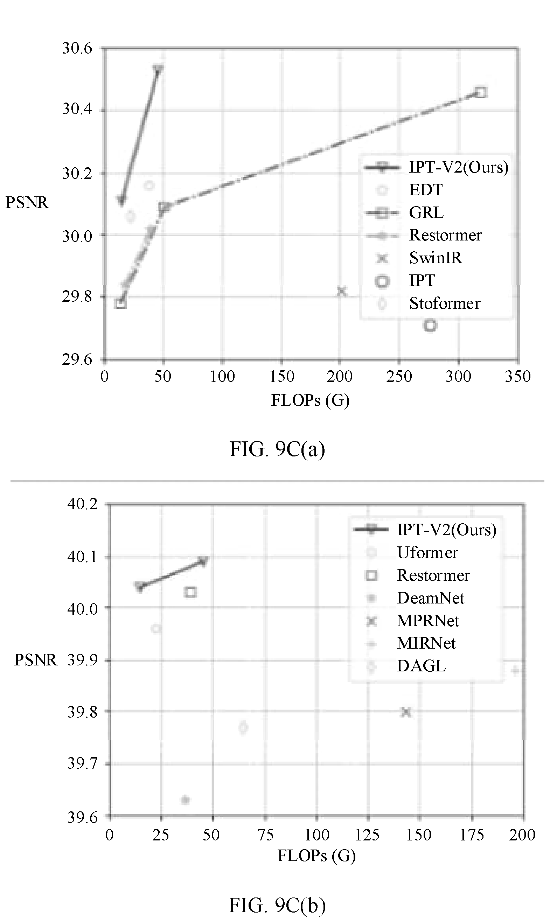

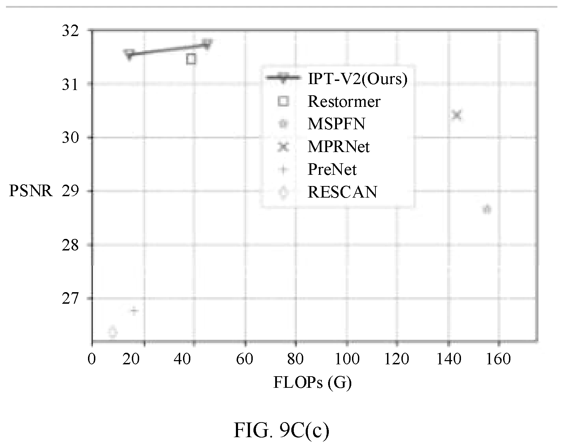

FIG. 9C(a) to FIG. 9C(c) are diagrams of FLOPS-PNSR curves of different models in Gaussian denoising, real denoising, and deraining tasks. Results show that IPT-V2 outperforms an existing SOTA solution in multiple underlying vision tasks such as theoretical Gaussian denoising, real denoising, and deraining, and achieves a better FLOPS-PNSR curve. Table 1 is a table of an ablation experiment of different modules on a Gaussian denoising task. As shown in Table 1, after original CSA is replaced with CB-CSA in the present invention, PSNR is significantly improved without significant increase of Flops and Params. Table 2 is a table of effect of structures of serial connection, anti-serial connection, and parallel connection of channel self-attention and grid self-attention. As shown in Table 2, compared with Baseline (30.02 dB), PSNR is significantly improved, and effectiveness of the present invention is verified.

**Table 1**

| **Network** | **FLOPs(G)** | **Params(M)** | **PSNR** | | **SA module** | **FLOPs(G)** | **Params(M)** | **PSNR** | | **FFN module** | **FLOPs(G)** | **Params(M)** | **PSNR** |
|---|---|---|---|---|---|---|---|---|---|---|---|---|---|
| Restormer | 38.83 | 26.11 | 30.02 | | | | | | | FFN | 42.80 | 25.75 | 30.40 |
| + G-SSA | 42.86 | 26.01 | 30.44 | | All CB-CSA | 42.17 | 26.64 | 30.10 | | LeFFN | 45.16 | 26.49 | 30.47 |
| + CB-CSA | 43.90 | 26.06 | 30.48 | | All G-SSA | 45.36 | 25.87 | 30.48 | | GDFN | 43.90 | 26.06 | 30.48 |
| + Rep-LeFFN | 45.16 | 26.49 | 30.53 | | CB-CSA + G-SSA | 45.16 | 26.49 | 30.53 | | Rep-LeFFN | 45.16 | 26.49 | 30.53 |
| (a) Architecture | | | | | (b) Self-Attention Block | | | | | (c) Feed-Forward Network | | | |

**Table 2**

| **Connection** | **FLOPs [G]** | **Params [M]** | **CBSD68 [8]** | **Kodak24 [2]** | **McMaster [12]** | **Urban100 [3]** |
|---|---|---|---|---|---|---|
| CB-CSA first, then G-SSA | 45.16 | 26.49 | 28.65 | 29.97 | 30.42 | 30.53 |
| G-SSA first, then CB-CSA | 45.16 | 26.49 | 28.65 | 29.97 | 30.4 1 | 30.52 |
| CB-CSA and G-SSA are parallel | 47.72 | 29.81 | 28.64 | 29.94 | 30.39 | 30.45 |

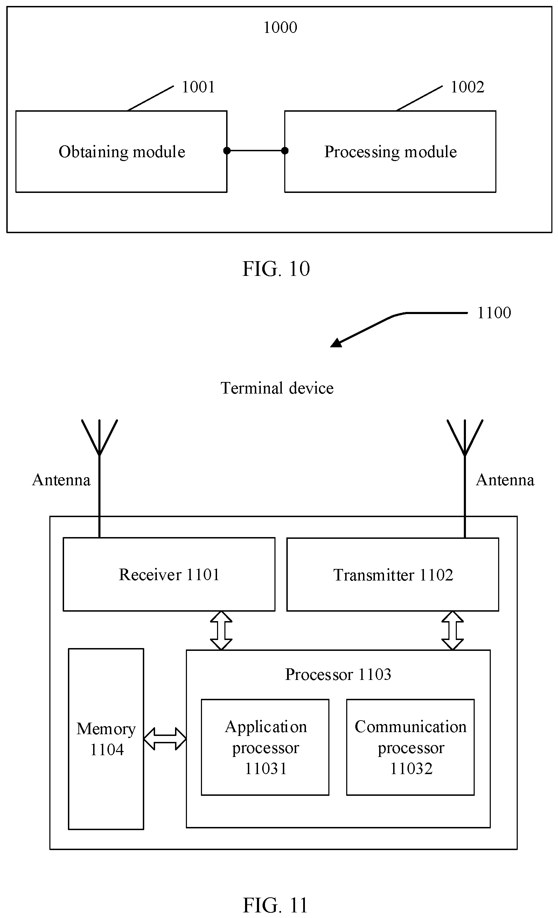

FIG. 10 is a diagram of a structure of a data processing apparatus according to an embodiment of this application. As shown in FIG. 10, this embodiment of this application provides the data processing apparatus, and the apparatus 1000 includes:

An obtaining module 1001 is configured to obtain target data.

For specific descriptions of the obtaining module 1001, refer to the descriptions of step 301 in the foregoing embodiment. Details are not described herein again.

A processing module 1002 is configured to obtain a first feature representation of the target data based on the target data by using the first network; and perform a feature extraction operation based on the first feature representation by using the target network layer, to obtain a second feature representation of the target data, where the feature extraction operation includes performing a self-attention operation mechanism operation between different channels and performing a self-attention mechanism operation between different spaces; and
obtain a processing result of the target data based on the second feature representation by using the second network.

For specific descriptions of the processing module 1002, refer to the descriptions of step 302 to step 304 in the foregoing embodiment. Details are not described herein again.

In a possible implementation,
the target data is image data, and the processing result is a processing result of an image processing task; or
the target data is audio data, and the processing result is a processing result of an audio processing task; or
the target data is text data, and the processing result is a processing result of a text processing task.

In a possible implementation, the target network layer includes a first attention module and a second attention module, and the processing module 1002 is specifically configured to:
perform, through the first attention module, a self-attention operation mechanism operation between different channels on the first feature representation; and
perform, through the second attention module, a self-attention mechanism operation between different spaces on the first feature representation on which the self-attention operation mechanism operation between the different channels is performed.

In a possible implementation, the target network layer includes a first attention module and a second attention module, and the processing module 1002 is specifically configured to:
perform, through the first attention module, a self-attention mechanism operation between different spaces on the first feature representation; and
perform, through the second attention module, a self-attention operation mechanism operation between different channels on the first feature representation on which the self-attention operation in a spatial dimension is performed.

In a possible implementation, the processing module is specifically configured to:
perform, through a first attention module, a self-attention operation mechanism operation between different channels on the first feature representation;
perform, through a second attention module, a self-attention mechanism operation between different spaces on the first feature representation; and
fuse, through a fusion module, the first feature representation on which the self-attention operation mechanism operation between the different channels is performed and the first feature representation on which the self-attention operation in a spatial dimension is performed.

In a possible implementation, the self-attention operation mechanism operation between the different channels includes:
separately dividing a Q matrix, a K matrix, and a V matrix of an input feature to obtain multiple first Q matrices, multiple first K matrices, and multiple first V matrices, where the first Q matrices, the first K matrices, and the first V matrices are in one-to-one correspondence, and a first Q matrix, a first K matrix, and a first V matrix that have a correspondence have a consistent size;
obtaining multiple first computation results based on the multiple first Q matrices, the multiple first K matrices, and the multiple first V matrices, where each first computation result is obtained by performing an operation on a first Q matrix, a first K matrix, and a first V matrix that have a correspondence, and a fused result of the multiple first operation results is used to obtain a result of the self-attention operation mechanism operation between the different channels.

In a possible implementation, the self-attention operation mechanism operation between the different channels includes:
shuffling and dividing elements included in each of a Q matrix, a K matrix, and a V matrix of an input feature to obtain multiple second Q matrices, multiple second K matrices, and multiple second V matrices, where the second Q matrices, the second K matrices, and the second V matrices are in one-to-one correspondence, and the corresponding second Q matrix, second K matrix, and second V matrix have a consistent size;
obtaining multiple second computation results based on the multiple second Q matrices, the multiple second K matrices, and the multiple second V matrices, where each second computation result is obtained by performing an operation on a second Q matrix, a second K matrix, and a second V matrix that have a correspondence; and
fusing the multiple first operation results to obtain a result of the self-attention operation mechanism operation between the different channels.

In a possible implementation, the processing module 1002 is further configured to:
fuse a fused result of the multiple first operation results and the fused result of the multiple second operation results, to obtain the result of the self-attention operation mechanism operation between the different channels.

In a possible implementation, the first network, the target network layer, or the second network further includes a feed-forward network FFN; and
the FFN is used to perform multiple parallel depth separable convolution operations and/or multiple serial point convolution operations on a result obtained through nonlinear activation; or
the FFN is used to perform a target point convolution operation on a result obtained through nonlinear activation.

In a possible implementation,
during model training, the FFN is used to perform the multiple parallel depth separable convolution operations and/or the multiple serial point convolution operations on the result obtained through nonlinear activation; and
during model inference, the FFN is used to perform the target point convolution operation on the result obtained through nonlinear activation, and the target point convolution operation is equivalent to the multiple parallel depth separable convolution operations and/or the multiple serial point convolution operations after training.

The following describes a terminal device according to an embodiment of this application. FIG. 11 is a diagram of a structure of a terminal device according to an embodiment of this application. The terminal device 1100 may be specifically a virtual reality VR device, a mobile phone, a tablet, a notebook computer, an intelligent wearable device, or the like. This is not limited herein. Specifically, the terminal device 1100 includes a receiver 1101, a transmitter 1102, a processor 1103, and a memory 1104 (where there may be one or more processors 1103 in the terminal device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1103, or implemented by the processor 1103. The processor 1103 may be an integrated circuit chip and has a signal processing capability. In an implementation process, each step of the foregoing method may be completed by using an integrated logic circuit of hardware in the processor 1103 or an instruction in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1104, and the processor 1103 reads information in the memory 1104 and completes steps related to the model training or model inference process in the method in combination with hardware of the processor.

The receiver 1101 may be configured to: receive input digit or character information, and generate a signal input related to a related setting and function control of the execution device. The transmitter 1102 may be configured to output the digital or character information through a first interface. The transmitter 1102 may be further configured to send instructions to a disk group through the first interface, to modify data in the disk group. The transmitter 1102 may further include a display device like a display.

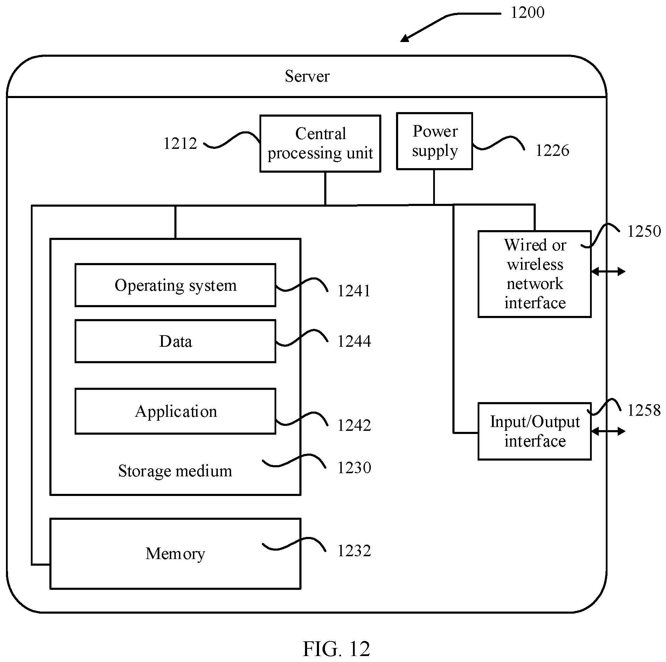

An embodiment of this application further provides a server. FIG. 12 is a diagram of a structure of a server according to an embodiment of this application. The server 1200 may vary greatly due to different configurations or performance, and may include one or more central processing units (central processing unit, CPU) 1212 (for example, one or more processors) and a memory 1232, and one or more storage media 1230 (for example, one or more mass storage devices) that stores an application 1242 or data 1244. The memory 1232 and the storage medium 1230 may perform transitory storage or persistent storage. A program stored in the storage medium 1230 may include one or more modules (not shown in the figure), and each module may include a series of instruction operations for a server. Still further, the central processing unit 1212 may be configured to: communicate with the storage medium 1230, and perform, on the server 1200, the series of instruction operations in the storage medium 1230.

The server 1200 may further include one or more power supplies 1226, one or more wired or wireless network interfaces 1250, one or more input/output interfaces 1258, or one or more operating systems 1241, for example, Windows ServerTM, Mac OS XTM, UnixTM, LinuxTM, and FreeBSDTM.

In this embodiment of this application, the central processing unit 1212 is configured to perform an action related to model training or model inference in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

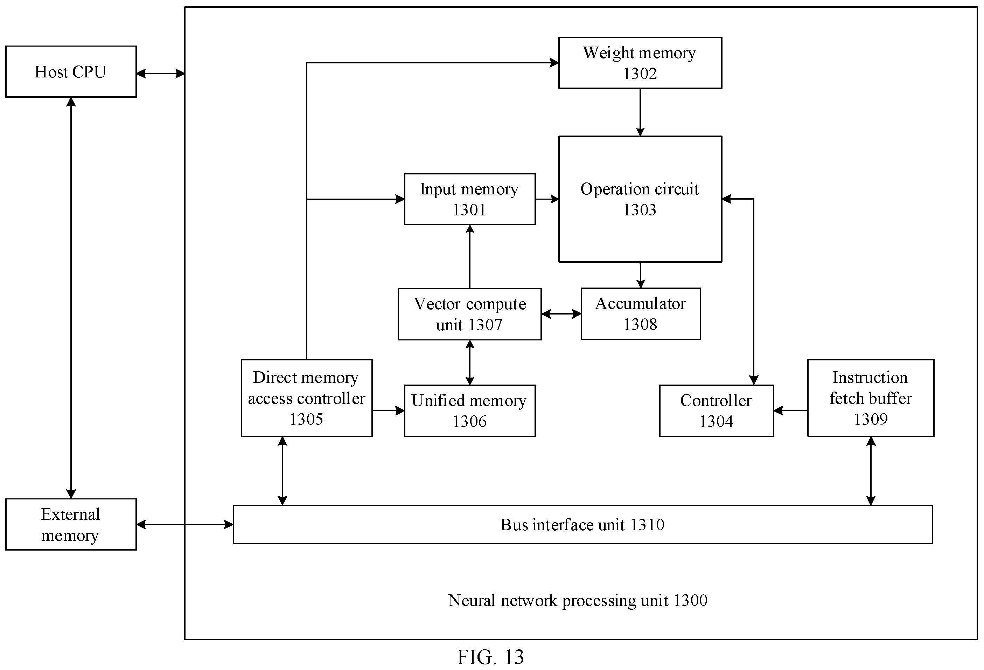

Specifically, FIG. 13 is a diagram of a structure of a chip according to an embodiment of this application. The chip may be represented as a neural network processing unit NPU 1300. The NPU 1300 is mounted to a host CPU (Host CPU) as a coprocessor, and the host CPU allocates a task to the NPU. A core part of the NPU is an operation circuit 1303, and a controller 1304 controls the operation circuit 1303 to extract matrix data in a memory and perform a multiplication operation.

In some implementations, the operation circuit 1303 includes multiple processing units (Process Engine, PE). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there is an input matrix A, a weight matrix B, and an output matrix C. The operation circuit fetches, from a weight memory 1302, data corresponding to the matrix B, and buffers the data on each PE in the operation circuit. The operation circuit fetches data of the matrix A from an input memory 1301 to perform a matrix operation on the matrix B, and stores an obtained partial result or an obtained final result of the matrix into an accumulator (accumulator) 1308.

A unified memory 1306 is configured to store input data and output data. Weight data is directly transferred to the weight memory 1302 through a direct memory access controller (Direct Memory Access Controller, DMAC) DMAC 1305. The input data is also transferred to the unified memory 1306 through the DMAC.

A BIU is a bus interface unit, namely, a bus interface unit 1310, and is configured to perform interaction between an AXI bus and the DMAC and between the AXI bus and an instruction fetch buffer (Instruction Fetch Buffer, IFB) 1309.

The bus interface unit (Bus Interface Unit, BIU for short) 1310 is used by the instruction fetch buffer 1309 to obtain an instruction from an external memory, and is further used by the direct memory access controller 1305 to obtain original data of the input matrix A or the weight matrix B from the external memory.

The DMAC is mainly configured to transfer input data in the external memory DDR to the unified memory 1306, transfer weight data to the weight memory 1302, or transfer input data to the input memory 1301.

A vector compute unit 1307 includes multiple operation processing units; and if necessary, performs further processing such as vector multiplication, vector addition, an exponential operation, a logarithmic operation, or value comparison on an output of the operation circuit 1303. The vector compute unit 1307 is mainly used for non-convolutional/fully connected layer network calculation in a neural network, such as batch normalization (batch normalization), pixel-level summation, and upsampling of a feature map.

In some implementations, a processed vector output by the vector compute unit 1307 can be stored into the unified memory 1306. For example, the vector compute unit 1307 may apply a linear function or a non-linear function to the output of the operation circuit 1303, for example, perform linear interpolation on a feature plane extracted at a convolutional layer. For another example, the vector computing unit 1307 may apply a linear function or a non-linear function to a vector of an accumulated value, to generate an activation value. In some implementations, the vector compute unit 1307 generates a normalized value, a pixel-level summation value, or both. In some implementations, the processed output vector can be used as an activation input to the operation circuit 1303, for example, used in a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on multiple network units. Some or all the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data processing method, applied to processing of a machine learning model, wherein the machine learning model comprises a first network, a target network layer, and a second network, and the method comprises:
obtaining target data;
obtaining a first feature representation of the target data based on the target data by using the first network;
performing a feature extraction operation based on the first feature representation by using the target network layer, to obtain a second feature representation of the target data, wherein the feature extraction operation comprises performing a self-attention mechanism (self attention) operation between different channels and performing a self-attention mechanism operation between different spaces, and the target network layer is a network layer in the first network; and
obtaining a processing result of the target data based on the second feature representation by using the second network.

2. The method according to claim 1, wherein the target network layer is a transformer layer.

3. The method according to claim 1 or 2, wherein the target data is image data, and the processing result is a processing result of an image processing task; or
the target data is audio data, and the processing result is a processing result of an audio processing task; or
the target data is text data, and the processing result is a processing result of a text processing task.

4. The method according to any one of claims 1 to 3, wherein the target network layer comprises a first attention module and a second attention module, and the performing the feature extraction operation based on the first feature representation by using the target network layer comprises:
performing, through the first attention module, a self-attention operation mechanism operation between different channels on the first feature representation; and
performing, through the second attention module, a self-attention mechanism operation between different spaces on the first feature representation on which the self-attention operation mechanism operation between the different channels is performed.

5. The method according to any one of claims 1 to 3, wherein the target network layer comprises a first attention module and a second attention module, and the performing the feature extraction operation based on the first feature representation by using the target network layer comprises:
performing, through the first attention module, a self-attention mechanism operation between different spaces on the first feature representation; and
performing, through the second attention module, a self-attention operation mechanism operation between different channels on the first feature representation on which the self-attention operation in a spatial dimension is performed.

6. The method according to any one of claims 1 to 3, wherein the target network layer comprises a first attention module, a second attention module, and a fusion module, and the performing the feature extraction operation based on the first feature representation by using the target network layer comprises:
performing, through the first attention module, a self-attention operation mechanism operation between different channels on the first feature representation;
performing, through the second attention module, a self-attention mechanism operation between different spaces on the first feature representation; and
fusing, through the fusion module, the first feature representation on which the self-attention operation mechanism operation between the different channels is performed and the first feature representation on which the self-attention operation in a spatial dimension is performed.

7. The method according to any one of claims 1 to 6, wherein the self-attention operation mechanism operation between the different channels comprises:
separately dividing a Q matrix, a K matrix, and a V matrix of an input feature to obtain multiple first Q matrices, multiple first K matrices, and multiple first V matrices, wherein the first Q matrices, the first K matrices, and the first V matrices are in one-to-one correspondence;
obtaining multiple first computation results based on the multiple first Q matrices, the multiple first K matrices, and the multiple first V matrices, wherein each first computation result is obtained by performing an operation on a first Q matrix, a first K matrix, and a first V matrix that have a correspondence; and
fusing the multiple first operation results to obtain a result of the self-attention operation mechanism operation between the different channels.

8. The method according to any one of claims 1 to 6, wherein the self-attention operation mechanism operation between the different channels comprises:
shuffling and dividing elements comprised in each of a Q matrix, a K matrix, and a V matrix of an input feature to obtain multiple second Q matrices, multiple second K matrices, and multiple second V matrices, wherein the second Q matrices, the second K matrices, and the second V matrices are in one-to-one correspondence, and the corresponding second Q matrix, second K matrix, and second V matrix have a consistent size; and
obtaining multiple second computation results based on the multiple second Q matrices, the multiple second K matrices, and the multiple second V matrices, wherein each second computation result is obtained by performing an operation on a second Q matrix, a second K matrix, and a second V matrix that have a correspondence, and a fused result of the multiple second operation results is used to obtain a result of the self-attention operation mechanism operation between the different channels.

9. The method according to claim 7 or 8, wherein the method further comprises:
fusing a fused result of the multiple first operation results and the fused result of the multiple second operation results, to obtain the result of the self-attention operation mechanism operation between the different channels.

10. The method according to any one of claims 1 to 9, wherein the first network, the target network layer, or the second network further comprises a feed-forward network FFN; and
the FFN is used to perform multiple parallel depth separable convolution operations and/or multiple serial point convolution operations on a result obtained through nonlinear activation; or
the FFN is used to perform a target point convolution operation on a result obtained through nonlinear activation.

11. The method according to claim 10, wherein
during model training, the FFN is used to perform the multiple parallel depth separable convolution operations and/or the multiple serial point convolution operations on the result obtained through nonlinear activation; and
during model inference, the FFN is used to perform the target point convolution operation on the result obtained through nonlinear activation, and the target point convolution operation is equivalent to the multiple parallel depth separable convolution operations and/or the multiple serial point convolution operations after training.

12. A data processing apparatus, applied to processing of a machine learning model, wherein the machine learning model comprises a first network, a target network layer, and a second network, and the apparatus comprises:
an obtaining module, configured to obtain target data; and
a processing module, configured to obtain a first feature representation of the target data based on the target data by using the first network; and perform a feature extraction operation based on the first feature representation by using the target network layer, to obtain a second feature representation of the target data, wherein the feature extraction operation comprises performing a self-attention operation mechanism operation between different channels and performing a self-attention mechanism operation between different spaces, and the target network layer is a network layer in the first network; and
obtain a processing result of the target data based on the second feature representation by using the second network.

13. The apparatus according to claim 12, wherein
the target data is image data, and the processing result is a processing result of an image processing task; or
the target data is audio data, and the processing result is a processing result of an audio processing task; or
the target data is text data, and the processing result is a processing result of a text processing task.

14. The apparatus according to claim 12 or 13, wherein the target network layer comprises a first attention module and a second attention module, and the processing module is specifically configured to:
perform, through the first attention module, a self-attention operation mechanism operation between different channels on the first feature representation; and
perform, through the second attention module, a self-attention mechanism operation between different spaces on the first feature representation on which the self-attention operation mechanism operation between the different channels is performed.

15. The apparatus according to claim 12 or 13, wherein the target network layer comprises a first attention module and a second attention module, and the processing module is specifically configured to:
perform, through the first attention module, a self-attention mechanism operation between different spaces on the first feature representation; and
perform, through the second attention module, a self-attention operation mechanism operation between different channels on the first feature representation on which the self-attention operation in a spatial dimension is performed.

16. The apparatus according to claim 12 or 13, wherein the processing module is specifically configured to:
perform, through a first attention module, a self-attention operation mechanism operation between different channels on the first feature representation;
perform, through a second attention module, a self-attention mechanism operation between different spaces on the first feature representation; and
fuse, through a fusion module, the first feature representation on which the self-attention operation mechanism operation between the different channels is performed and the first feature representation on which the self-attention operation in a spatial dimension is performed.

17. The apparatus according to any one of claims 12 to 16, wherein the self-attention operation mechanism operation between the different channels comprises:
separately dividing a Q matrix, a K matrix, and a V matrix of an input feature to obtain multiple first Q matrices, multiple first K matrices, and multiple first V matrices, wherein the first Q matrices, the first K matrices, and the first V matrices are in one-to-one correspondence, and a first Q matrix, a first K matrix, and a first V matrix that have a correspondence have a consistent size;
obtaining multiple first computation results based on the multiple first Q matrices, the multiple first K matrices, and the multiple first V matrices, wherein each first computation result is obtained by performing an operation on a first Q matrix, a first K matrix, and a first V matrix that have a correspondence; and
fusing the multiple first operation results to obtain a result of the self-attention operation mechanism operation between the different channels.

18. The apparatus according to any one of claims 12 to 16, wherein the self-attention operation mechanism operation between the different channels comprises:
shuffling and dividing elements comprised in each of a Q matrix, a K matrix, and a V matrix of an input feature to obtain multiple second Q matrices, multiple second K matrices, and multiple second V matrices, wherein the second Q matrices, the second K matrices, and the second V matrices are in one-to-one correspondence, and the corresponding second Q matrix, second K matrix, and second V matrix have a consistent size; and
obtaining multiple second computation results based on the multiple second Q matrices, the multiple second K matrices, and the multiple second V matrices, wherein each second computation result is obtained by performing an operation on a second Q matrix, a second K matrix, and a second V matrix that have a correspondence, and a fused result of the multiple second operation results is used to obtain a result of the self-attention operation mechanism operation between the different channels.

19. The apparatus according to claim 17 or 18, wherein the processing module is further configured to:
fuse a fused result of the multiple first operation results and the fused result of the multiple second operation results, to obtain the result of the self-attention operation mechanism operation between the different channels.

20. The apparatus according to any one of claims 12 to 19, wherein the first network, the target network layer, or the second network further comprises a feed-forward network FFN; and
the FFN is used to perform multiple parallel depth separable convolution operations and/or multiple serial point convolution operations on a result obtained through nonlinear activation; or
the FFN is used to perform a target point convolution operation on a result obtained through nonlinear activation.

21. The apparatus according to claim 20, wherein
during model training, the FFN is used to perform the multiple parallel depth separable convolution operations and/or the multiple serial point convolution operations on the result obtained through nonlinear activation; and
during model inference, the FFN is used to perform the target point convolution operation on the result obtained through nonlinear activation, and the target point convolution operation is equivalent to the multiple parallel depth separable convolution operations and/or the multiple serial point convolution operations after training.

22. A computer storage medium, wherein the computer storage medium stores one or more instructions, and when the instructions are executed by one or more computers, the one or more computers are enabled to perform operations of the method according to any one of claims 1 to 11.

23. A computer program product, comprising computer-readable instructions, wherein when the computer-readable instructions are run on a computer device, the computer device is enabled to perform the method according to any one of claims 1 to 11.

24. A system, comprising at least one processor and at least one memory, wherein the processor and the memory are connected and communicate with each other through a communication bus;
the at least one memory is configured to store code; and
the at least one processor is configured to execute the code, to perform the method according to any one of claims 1 to 11.

25. A chip, comprising a processor, wherein the processor is configured to support a data processing apparatus in implementing the method according to any one of claims 1 to 11.
